# EUROPEAN PATENT SPECIFICATION

(11) **EP 0 417 944 B1**
(45) Date of publication and mention of the grant of the patent: **12.04.1995**
(21) Application number: 90309560.2
(22) Date of filing: 31.08.1990
(51) Int. Cl.: B60R 25/10, G08B 25/00

(54) **A method for reporting a break-in into a vehicle equipped with a mobile telephone and for monitoring the movements of the vehicle in a PLMN system, and a mobile telephone to be used in the method**
Verfahren zur Meldung eines Einbruchversuches und zur Überwachung der Fahrzeugbewegungen in einem PLMN-System für ein mit einem beweglichen Telefon versehenes Kraftfahrzeug und ein für dieses Verfahren geeignetes bewegliches Telefon
Procédé pour rapporter une tentative de vol d'un véhicule équipé d'un téléphone mobile et pour surveiller les mouvements du véhicule à l'aide d'un système PLMN, et téléphone mobile à utiliser pour ledit procédé

(30) Priority: 15.09.1989 FI 894370
(43) Date of publication of application: 20.03.1991
(73) Proprietor: NOKIA MOBILE PHONES LTD., 24101 Salo (FI)
(72) Inventor: Vainio, Aimo, SF-90540 Oulu (FI)
(74) Representative: Bridge-Butler, Alan James

(56) References cited:
- DE-A- 3 524 546
- US-A- 4 821 309
- US-A- 4 825 457

## Description

The invention relates to a method for detecting a break-in into a vehicle equipped with a radio telephone, the radio telephone operating in a digital PLMN network, particularly in a GSM network having a short message service and/or data service. The invention also relates to a mobile telephone used in the method.

As the number of automobiles increases it is probable that the number of automobile thefts and break-ins will also increase. The target of a theft or a break-in will most probably be an automobile with something valuable, for example a mobile telephone. To deter an automobile break-in, and to locate a stolen automobile, it is very important to know when and where the automobile was stolen or broken into. In addition, it would be advantageous to know the travel direction of the automobile.

There is known an automobile radio telephone (Motorola NMT-900) having a theft alarm as one of its functions. When a theft occurs, the telephone places a call to a certain number pre-programmed in the telephone.

US Patent 4 825 457 describes a system wherein an event detector activates a communication device when an event is detected, the communication device including a digital dialler connected via a cellular interface to a cellular transceiver and antenna, so that a prerecorded message stored in the communicator can be sent to a predetermined telephone subscriber number when the device operates.

Such prior-art theft alarms for automobile radio telephones are not capable of identifying when, where and which automobile has been broken into. The alarm thus provides no help in tracing the automobile. In addition, there must be someone continuously on duty at the telephone if this telephone is not capable of automatically recording a telephone alarm.

The method according to the invention provides functions by means of which a stolen automobile with a mobile telephone can rather easily be identified and found. The method is intended particularly for a mobile telephone in accordance with the GSM system to be adopted for use at the beginning of next the decade.

The method requires a GSM network, for it utilises the short message service (SMS) or data service of the network. The short message service of the GSM network is defined in the specifications GSM 03.40 (technical realisation of the short message service), GSM 04.08 (mobile radio interference layer 3 specification), and GSM 04.11 (point-to-point short message service support on mobile radio interference). In the service of the network, a short message can be transmitted to a short-message terminal (SME), which can be any terminal, an ISDN terminal, a GSM telephone, or PC's or computers in a general network, as long as it has an understandable address on the basis of which the service center (SC) of the network can route the message. The method utilises the short message service of the GSM network in such a manner that the GSM network or a larger ISDN network is not required to have, in addition to the agreed-upon specifications, any specific functions for the implementation of the method according to the invention. The mobile originated (MO) case defined in the GSM specifications is applied to a short message transmitted by the telephone.

According to a first aspect of the invention, a method for detecting a break-in into a vehicle equipped with a radio telephone which operates in a digital PLMN network, particularly a GSM network, which has a short message service and/or a data service, is characterised in that an excitation signal arriving at the telephone causes the telephone to form and transmit a short message which contains the clock time, support station identification data, the address of the short message terminal receiving the message, and possibly vehicle identification data.

According to a second aspect of the invention, a radio telephone installed in a vehicle and operating in a digital PLMN system, particularly a GSM system, the telephone automatically reporting a break-in into the vehicle, and having an MO message transmission in accordance with the GSM specification is characterised in that the telephone has a circuit arrangement which forms a short message including the clock time, the location of the telephone to the accuracy of a support station, the address of the receiving short message terminal, and the vehicle identification data, and that the telephone has a connection for an initial excitation signal which will initiate the formation of a short message and the transmission of a mobile originated message.

An excitation signal arriving at the telephone may be simply an on/off signal indicating that the automobile has been broken into or that the automobile has been stolen. The signal may come from a sensor connected, for example, to the window pane, driving wheel lock or some other component of the automobile. In the event of a break-in or unauthorised use, an excitation signal will proceed to the mobile telephone and within it to the circuit which will initiate the short message procedure. Thereafter the mobile telephone will form a short message including the clock time of the event; the address of the recipient of the message, stored in advance in the memory of the telephone; and support station identification data. System parameters transmitted by a support station are primarily used for the identification of the support station. In addition, the identification data of the automobile are added to the short message.

After the short message has been formed it is automatically transmitted, the support station relaying the short message to the network service centre (SC), which will route the message to the recipient, which is the short message terminal SME. The entire operation will take place unknown to the thief.

The method can also be applied to automatic monitoring of the movements of a vehicle. In this case the excitation signal, an on/off signal, arriving at the telephone, is given by suitable arrangements at regular time intervals. In this case the recipient of the short message transmitted at time intervals knows where a certain automobile is at each given time and in what direction it is travelling.

The method according to the invention is described with reference to the accompanying Figures, in which;
Figure 1 depicts diagrammatically an example of the progress of a signal, and
Figure 2 depicts the determination of the location of the telephone during its movement.

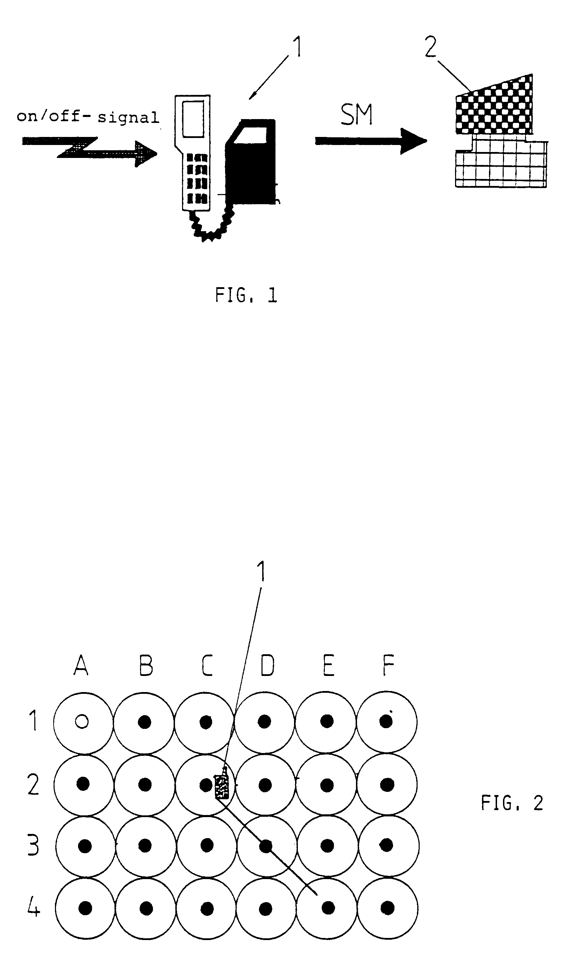

Figure 1 depicts the principle of the method. An on/off signal is received by the mobile telephone via either a wired or a wireless route from a sensor detecting a break-in or a theft. In the telephone 1, the signal initiates the forming of a short message and a mobile originated (MO) call. The mobile telephone 1 then forms a short message SM, which includes the clock time, the location of the event to the accuracy of a support station, the automobile identification data, and the address of the recipient. The support station data are obtained from the system parameters transmitted by the station. The clock time appended to the message by the short message forming procedure is obtained from the clock of the telephone or from a support station. The message is relayed via a support station to the GSM network, in which it will proceed to the recipient's short message terminal (SME) 2, which may be an ISDN terminal, a GSM telephone, or a PC or computer operating in a public network. The requirement is that the terminal has an address to which the service centre can direct the short message transmitted by the telephone of the automobile which has been broken into or stolen.

Figure 2 depicts a cellular GSM network. Let us assume that at the time of the break-in or theft of the automobile the telephone 1 is within the support station identification area C2. The on/off signal initiates in the telephone the short message formation procedure, whereby a short message including the information referred to above is transmitted automatically. The identification data of the station C2, which the telephone receives as a system parameter, are appended to the short message. Now the recipient knows that the automobile has been broken into. If it is desired to know the travel direction of the vehicle, an automatic travel monitoring system will be used: after the first external on/off signal the telephone will give at suitable time intervals an internal excitation signal, whereupon the short message is transmitted regularly. When moving via cell D3 to cell E4, the telephone transmits the identification data of these support stations and the other identification data mentioned above, whereupon it will be possible, on the basis of the support station data, to determine the travel direction of the automobile.

The method according to the invention is very advantageous to implement. No special properties in addition to those already specified are required of the relay network itself. The telephone is required only to have the short message (SMS) forming procedure and the transmission of the mobile originated (MO) message, which has already been defined in the GSM specification. In addition, the physical connection to the outer world is simple, only an on/off signal. No alphabetical keyboards complicating subscriber connection of the short-message (SMS) need to be connected to the telephone. The message transmitted by the telephone can be transmitted to anyone, for example to the police or to automobile rental operators, in which case they know when and where an automobile was broken into. Transportation firms can use the invention for monitoring the movements of their vehicles within the entire area of Europe, as can the army for monitoring the movements of their own vehicles, since GSM radio frequencies are well protected. By carrying out measurements it is possible to examine the next closest support station or support stations in order to know at which point in a cell the telephone was at the time concerned. Such location determination based on coordinates is more precise and is not tied to the support station density. An expert in the art can foresee numerous applications while remaining within the scope of protection of the Patent Claims.

## Claims

1. A method for detecting a break-in into a vehicle equipped with a radio telephone which operates in a digital PLMN network, particularly a GSM network, which has a short message service and/or a data service, characterised in that an initial excitation signal arriving at the telephone (1) causes the telephone to form and transmit a short message which includes the clock time, support station identification data, the address of the receiving short message terminal (2), and possibly the identification data of the vehicle.

2. A method according to Claim 1, characterised in that the address of the short message terminal (2) receiving the message has been stored in advance in the memory of the telephone (1).

3. A method according to Claims 1 and 2, characterised in that the service centre of the GSM system routes the short message to the receiving short message terminal (2) indicated by the address included in the message.

4. A method according to Claim 1, characterised in that the initial excitation signal is an on/off signal received from a sensor outside the telephone adapted to detect theft of, or a break-in into, the vehicle.

5. A method according to Claim 1, characterised in that a series of subsequent excitation signals is formed at regular intervals after the initial excitation signal, in which case the travel route of the vehicle can be determined from the location information included in the short message transmitted.

6. A radio telephone installed in a vehicle and operating in a digital PLMN system, particularly a GSM system, the telephone automatically reporting a break-in into the vehicle, and having an MO message transmission in accordance with the GSM specification, characterised in that the telephone has a circuit arrangement which forms a short message including the clock time, the location of the telephone to the accuracy of a support station, the address of the receiving short message terminal, and the vehicle identification data, and that the telephone has a connection for an initial excitation signal which will initiate the formation of a short message and the transmission of a mobile originated message.

7. A radio telephone according to Claim 6, characterised in that the initial excitation signal is an on/off signal received from a sensor outside the telephone adapted to detect theft of, or a break-in into, the vehicle.

8. A radio telephone according to Claim 6, characterised in that a series of subsequent excitation signals is formed within the radio telephone itself at desired time intervals after the initial excitation signal.

## Patentansprüche

1. Verfahren zum Feststellen eines Einbruchs in ein Kraftfahrzeug, das mit einem Funktelefon ausgestattet ist, das in einem digitalen PLMN-Netz, insbesondere in einem GSM-Netz, arbeitet, das über einen Kurznachrichtendienst und/oder über einen Datendienst verfügt, dadurch gekennzeichnet, daß ein am Telefon (1) eintreffendes anfängliches Anregungssignal das Telefon veranlaßt, eine Kurznachricht zu bilden und zu senden, die die Uhrzeit, Identifikationsdaten der Unterstützungsstation, die Adresse des empfangenden Kurznachrichtenendgeräts (2) und vielleicht die Fahrzeug-Identifikationsdaten enthält.

2. Verfahren nach Anspruch 1, dadurch gekennzeichnet, daß die Adresse des Kurznachrichtenendgeräts (2), das die Nachricht empfangt, im voraus im Speicher des Telefons (1) gespeichert worden ist.

3. Verfahren nach Anspruch 1 und 2, dadurch gekennzeichnet, daß das Dienstleistungszentrum des GSM-Systems die Kurznachricht dem durch die in der Nachricht enthaltene Adresse bezeichneten empfangenden Kurznachrichtenendgerät (2) zuleitet.

4. Verfahren nach Anspruch 1, dadurch gekennzeichnet, daß das von einem Sensor außerhalb des Telefons empfangene anfängliche Anregungssignal ein EIN/AUS-Signal ist, das angepaßt ist, um einen Diebstahl des Fahrzeugs oder einen Einbruch in das Fahrzeug festzustellen.

5. Verfahren nach Anspruch 1, dadurch gekennzeichnet, daß eine Reihe nachfolgender Anregungssignale in regelmäßigen Abständen nach dem anfänglichen Anregungssignal gebildet wird, wodurch die Fahrtroute des Fahrzeugs aus der in der gesendeten Kurznachricht enthaltenen Ortsinformation bestimmt werden kann.

6. Funktelefon, das in einem Fahrzeug installiert ist und in einem digitalen PLMN-System, insbesondere in einem GSM-System, arbeitet, wobei das Telefon automatisch einen Einbruch in das Fahrzeug meldet und eine MO-Nachrichtenübertragung gemäß der GSM-Spezifikation besitzt, dadurch gekennzeichnet, daß das Telefon eine Schaltungsanordnung besitzt, die eine Kurznachricht bildet, die die Uhrzeit, den Standort des Telefons mit der Genauigkeit einer Unterstützungsstation, die Adresse des empfangenden Kurznachrichtenendgeräts sowie die Fahrzeug-Identifikationsdaten umfaßt, und daß das Telefon einen Anschluß für ein anfängliches Anregungssignal besitzt, das die Bildung einer Kurznachricht und das Senden einer vom Mobilgerät ausgehenden Nachricht einleiten wird.

7. Funktelefon nach Anspruch 6, dadurch gekennzeichnet, daß das von einem Sensor außerhalb des Telefons empfangene anfängliche Anregungssignal ein EIN/AUS-Signal ist, das angepaßt ist, um einen Diebstahl des Fahrzeugs oder einen Einruch in das Fahrzeug festzustellen.

8. Funktelefon nach Anspruch 6, dadurch gekennzeichnet, daß eine Reihe nachfolgender Anregungssignale innerhalb des Funktelefons selbst in gewünschten Zeitabständen nach dem anfänglichen Anregungssignal gebildet wird.

## Revendications

1. Procédé pour détecter une effraction dans un véhicule muni d'un radio téléphone qui fonctionne dans un réseau PLMN numérique, particulièrement un réseau GSM, qui comporte un service de message court et/ou un service de données, caractérisé en ce qu'un signal d'excitation initial arrivant au téléphone (1) amène le téléphone à former et émettre un message court qui comprend l'heure, les données d'identification de la station de support, l'adresse du terminal de message court destinataire (2) et éventuellement les données d'identification du véhicule.

2. Procédé selon la revendication 1, caractérisé en ce que l'adresse du terminal de message court (2) recevant le message est mémorisé à l'avance dans la mémoire du téléphone (1).

3. Procédé selon la revendication 1 et 2, caractérisé en ce que le centre d'exploitation du système GSM achemine le message court au terminal de message court destinataire (2) indiqué par l'adresse comprise dans le message.

4. Procédé selon la revendication 1, caractérisé en ce que le signal d'excitation initial est un signal actif/inactif reçu à partir d'un capteur extérieur au téléphone, prévu pour détecter le vol ou l'effraction d'un véhicule.

5. Procédé selon la revendication 1, caractérisé en ce qu'une série de signaux d'excitation ultérieurs est formée à intervalles réguliers après le signal d'excitation initial, auquel cas l'itinéraire de déplacement du véhicule peut être déterminé à partir des informations de position comprises dans le message court transmis.

6. Radio téléphone installé dans un véhicule et fonctionnant dans un système PLMN numérique, particulièrement un système GSM, le téléphone rendant compte automatiquement d'une effraction du véhicule et ayant une transmission de message MO conforme à la spécification GSM, caractérisé en ce que le téléphone comporte une disposition de circuit qui forme un message court comprenant l'heure, la position du téléphone avec une précision liée à la station de support, l'adresse du terminal de message court destinataire et les données d'identification du véhicule, et en ce que le téléphone comporte une connexion pour un signal d'excitation initial qui initie la formation d'un message court et l'émission d'un message d'origine d'un mobile.

7. Radio téléphone selon la revendication 6, caractérisé en ce que le signal d'excitation initial est un signal actif/inactif reçu à partir d'un capteur extérieur au téléphone, prévu pour détecter le vol ou une effraction du véhicule.

8. Radio téléphone selon la revendication 6, caractérisé en ce qu'une série de signaux d'excitation ultérieurs est formée à l'intérieur du radio téléphone lui-même à des intervalles de temps souhaités, après le signal d'excitation initial.
